# EUROPEAN PATENT SPECIFICATION

(11) **EP 2 951 408 B1**
(45) Date of publication and mention of the grant of the patent: **10.10.2018**
(21) Application number: 14701971.5
(22) Date of filing: 27.01.2014
(51) Int. Cl.: F01L 1/047, F02B 57/00, F01L 1/344

(54) **A DEVICE FOR EFFECTING AN AXIAL SHIFT OF A ROTARY SHAFT FOR USE IN A VARIABLE CAMSHAFT DRIVE MECHANISM**
VORRICHTUNG ZUR DURCHFÜHRUNG EINES AXIALVERSCHIEBUNG EINER DREHWELLE BEI EINEM VARIABLEN NOCKENWELLENANTRIEBSMECHANISMUS
DISPOSITIF POUR OBTENIR UN DÉCALAGE AXIAL D'UN ARBRE ROTATIF, DESTINÉ À ÊTRE UTILISÉ DANS UN MÉCANISME D'ENTRAÎNEMENT D'ARBRE À CAMES VARIABLE

(30) Priority: 31.01.2013 GB 201301719
(43) Date of publication of application: 09.12.2015
(73) Proprietor: Jaguar Land Rover Limited, Coventy, Warwickshire CV3 4LF (GB)
(72) Inventor: PRINT, Iain, Whitley Coventry Warwickshire CV3 4LF (GB)
(74) Representative: Higgin, Paul
(86) International application number: PCT/EP2014/051467
(87) International publication number: WO 2014/118104

(56) References cited:
- EP-A1- 2 161 434
- DE-A1- 2 950 656
- GB-A- 375 315
- GB-A- 970 161
- GB-A- 1 011 700
- GB-A- 1 210 347
- JP-A- H0 526 017
- JP-A- H05 296 057
- JP-A- S60 113 006
- JP-A- S60 147 512
- US-A- 1 632 223
- US-A- 1 787 717
- US-A- 2 057 354
- US-A- 3 243 024
- US-A1- 2010 025 138

## Description

### TECHNICAL FIELD

The present invention relates to a device for effecting an axial shift of a rotary shaft, to a variable drive mechanism for a camshaft and a method of varying the drive of a camshaft. In particular, but not exclusively, the invention relates to a mechanical system for automatically adjusting the timing of valves in a combustion engine. Aspects of the invention relate to a device, to a variable drive mechanism, to an engine, to a vehicle and to a method.

### BACKGROUND

In internal combustion engines it is known to provide a plurality of cylinders and pistons for rotating a drive shaft via a crank shaft. In vehicle applications the crank shaft is coupled to the drive train, which may include a clutch, gearbox, prop shaft (for rear-wheel drive), differential, and final drive shafts. The cylinder comprises inlet and outlet apertures; these inlet and outlet apertures comprise valves for controlling ingress of a fuel/air mixture and egress of exhaust gases. The valves are controlled by one or more camshafts which determine the timing of the opening and closing of the valves with respect to the position or stroke of the piston in the respective cylinder.

It is desirable to adjust several parameters relating to the operation of the valves depending upon the load or requirements placed upon the engine. Such requirements may be, by way of non-limiting example: to increase engine power; and to reduce fuel consumption or engine emissions. Examples of the operational parameters that it is desirable to adjust include:
i. the timing of the valve opening and closing with respect to the piston stroke;
ii. the timing of the inlet valve opening/closing with respect to that of the outlet (exhaust) valve;
iii. the duration of time for which the valves are open and/or closed;
iv. the degree or extent to which the valve is opened (lifted).

The present invention seeks to provide an improvement in the field of variable camshaft drive mechanisms, which has particular application for vehicles. The invention may be utilised in applications other than for vehicles; for example it is foreseen that the invention may have application in other areas where is it desirable to effect an axial shift of a rotary shaft for example in compressors or pumps.

### SUMMARY OF THE INVENTION

Aspects of the invention provide a device, a variable drive mechanism, an engine, a vehicle and a method as claimed in the appended claims.

According to an aspect of the invention for which protection is sought, there is provided a device for effecting relative rotation of two components of a rotary shaft comprising:
a first component having a shaft and a head;
a second component having a first end and a second end and a bore extending longitudinally therethrough;
the shaft of the first component being inserted into the bore of the second component; and the device comprising:
   a detent for coupling the first component to the second component such that rotation of the second component causes the first component to rotate; and
   one or more actuators disposed in between the head of the first component and the first end of the second component;
wherein in response to rotation of the second component, about a longitudinal axis, a centrifugal effect causes the actuators to act upon the head of first component to move it axially with respect to the second component; and
wherein the device comprises a bi-metallic spring resiliently biased against the first component to resist the axial movement of the first component with respect to the second component, the resilience of the bi-metallic spring being dependent upon temperature.

The first end of the second component may be countersunk so as to define inclined ramps in walls of the second component and the actuators may comprise one or more rollers disposed in between the head of the first component and the first end of the second component in rolling contact with the inclined ramps.

The detent may comprise a groove and a bearing seated therein, the groove arranged to effect a rotation of the first component with respect to the second component as the first component is moved axially with respect to the second component.

The detent may comprise a groove and a bearing seated therein, the groove arranged parallel to a longitudinal axis of the shaft of the first component so as to restrict movement of the first component to be axially within the bore of the second component.

The bi-metallic spring may be disposed in thermal contact with a reservoir of liquid and wherein in response to a change in the temperature of the liquid in the reservoir, the resilience of the bi-metallic spring changes and thereby the device can be de-activated by the bi-metallic spring at certain temperatures.

The inclined ramps may comprise one or more tracks defined in and extending radially across the walls of the second component, each track being configured to receive a portion of a roller to restrict movement of the roller such that the roller cannot move circumferentially.

The first component may comprise a spline for coupling to a camshaft to effect rotation thereof.

According to another aspect of the invention for which protection is sought, there is provided a variable drive mechanism for a camshaft comprising:
a device as described in the foregoing paragraphs, wherein the shaft of the first component comprises a spline for coupling the first component to a camshaft, and the second component comprises a sprocket for being coupled to a crankshaft to effect rotation of the second component.

According to a further aspect of the invention for which protection is sought, there is provided an engine for a vehicle comprising:
one or more cylinders;
the or each cylinder comprising a piston slideably mounted therein;
the or each piston being coupled to a crankshaft by a connecting rod;
a first sprocket mounted upon the crankshaft;
the or each cylinder comprising one or more openings;
the or each opening comprising a valve for closing the opening;
a camshaft comprising one or more cams for actuating a respective valve; and
a variable drive mechanism as described in the foregoing paragraphs coupled to the camshaft; wherein the sprocket at the second component is coupled to the first sprocket such that rotation of the crankshaft effects rotation of the second component;
the engine being configured such that, in response to rotation of the second component, about a longitudinal axis, a centrifugal effect causes the actuators to act upon the head of the first component to move it axially with respect to the second component whereby changing a control parameter of the operation of the or each valve.

Optionally, the detent comprises a groove arranged to effect a rotation of the first component with respect to the second component, as the first component is moved axially with respect to the second component, so as to advance or retard the opening or closing of the or each valve with respect to a predefined position of a respective piston within its respective cylinder.

In some embodiments, each cylinder comprises at least two openings each having a valve, wherein at least one valve is an inlet valve for allowing insertion of charge into the cylinder, and at least one valve is an outlet valve for allowing egress of exhaust gases, the engine comprising a first camshaft having at least one cam for actuating a respective one of the at least one inlet valves and a second cam shaft having at least one cam for actuating a respective one of the at least one outlet valves, each camshaft comprising a variable drive mechanism coupled thereto, wherein each variable drive mechanism can advance or retard the opening or closing of the or each of the respective valves to which it is coupled with respect to a predefined position of a respective piston within its respective cylinder. In this way the period of time when both the inlet valves and the outlet valves are open or closed simultaneously can be controlled dependent upon rotational speed of the crankshaft.

Optionally, at least one valve mounted upon the camshaft comprises a profile which changes in an axial direction such that an axial movement of the camshaft effects a change in the cam profile with a change in the rotational speed of the crankshaft.

According to yet a further aspect of the invention for which protection is sought, there is provided a vehicle comprising the device or the variable drive mechanism as described in the foregoing paragraphs.

Within the scope of this application it is expressly intended that the various aspects, embodiments, examples and alternatives set out in the preceding paragraphs, in the claims and/or in the following description and drawings, may be taken independently or in any combination thereof. For example, features described in connection with one embodiment are applicable to all embodiments, unless such features are incompatible.

### BRIEF DESCRIPTION OF THE DRAWINGS

One or more embodiments of the invention will now be described, by way of example only, with reference to the accompanying drawings, in which:
FIGURE 1 is a schematic view of an internal combustion engine employing a variable camshaft drive mechanism according to an embodiment of the invention;
FIGURE 2A is a side view of a variable camshaft drive mechanism according to an embodiment of the invention;
FIGURES 2B and 2C are perspective views of the variable camshaft drive mechanism of Figure 2A;
FIGURE 3A is a cross-sectional view of the variable camshaft drive mechanism and a portion of the camshaft of Figure 1 shown in a first condition;
FIGURE 3B is a cross-sectional view of the variable camshaft drive mechanism and a portion of the camshaft of Figure 1 shown in a second condition;
FIGURE 4A is a cross-sectional view of the variable camshaft drive mechanism of Figure 2C;
FIGURE 4B is a cut away perspective view of the variable camshaft drive mechanism of Figure 2C;
FIGURE 5A is a side view of a first component forming the variable camshaft drive mechanism according to an embodiment of the invention;
FIGURE 5B is a perspective view of the first component of Figure 5A;
FIGURE 6A is a side view of a second component forming the variable camshaft drive mechanism according to an embodiment of the invention;
FIGURE 6B is a cut away perspective view of the second component of Figure 6A;
FIGURE 6C is a perspective view from a first end of the second component of Figure 6A;
FIGURE 6D is an end view of the second component of Figure 6A;
FIGURES 6E and 6F are further cut away perspective views of the second component of Figure 6A;
FIGURE 6G is perspective view of an actuator component or roller forming part of the variable camshaft drive mechanism according to an embodiment of the invention;
FIGURE 7 is a perspective view of a camshaft and the first component according to an embodiment of the invention;
FIGURES 8A, 8B and 8C are perspective views of a component forming the variable camshaft drive according to another embodiment of the invention;
FIGURE 9 is a cut away exploded perspective view of components for forming a variable camshaft drive mechanism according to a further embodiment of the invention;
FIGURE 10 is a cross-sectional view of the variable camshaft drive mechanism and a portion of the camshaft according to the further embodiment of the invention;
FIGURE 11A is a side view of a first component forming the variable camshaft drive mechanism according to a still further embodiment of the invention; and
FIGURE11B is a side view of a first component forming the variable camshaft drive mechanism according to yet another embodiment of the invention.

### DETAILED DESCRIPTION OF EMBODIMENTS

Detailed descriptions of specific embodiments of the device for effecting an axial shift of a rotary shaft, the variable drive mechanism for a camshaft, and the method of the present invention are disclosed herein. It will be understood that the disclosed embodiments are merely examples of the way in which certain aspects of the invention can be implemented and do not represent an exhaustive list of all of the ways the invention may be embodied. Indeed, it will be understood that the device for effecting an axial shift of a rotary shaft, the variable drive mechanism for a camshaft, and the method described herein may be embodied in various and alternative forms. The Figures are not necessarily to scale and some features may be exaggerated or minimised to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

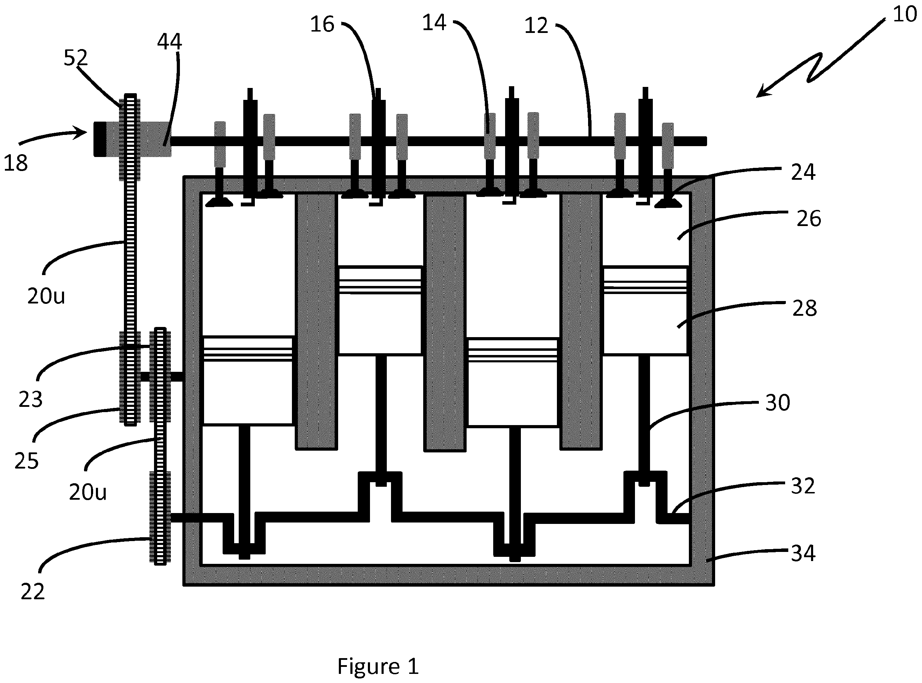

Referring to Figure 1, there is shown a schematic view of an internal combustion engine 10.

The internal combustion engine 10 comprises four cylinders 26, in each of which a piston 28 is located. The cylinders 26 are defined by a housing or engine block 34. The pistons 28 are slideably mounted within the cylinders 26. The pistons 28 are coupled to a crank shaft 32 by connecting rods 30. The crank shaft 32 is arranged so as to convert linear motion of the pistons 28 into rotary motion. It is envisaged that the crank shaft 32 will be coupled to a drive train (not shown) to provide rotary drive to road wheels (not shown) of a vehicle (not shown). The cylinders each comprise inlet and outlet apertures, these inlet and outlet apertures comprise valves 24 for controlling ingress of fuel/air mixture and egress of exhaust gases. The valves 24 are controlled by one or more camshafts 12 which determine the timing of the opening and closing of the valves 24 with respect to the position or stroke of the piston 28 in the respective cylinder 26. The camshaft 12 comprises a plurality of cams 14 mounted thereon; a cam 14 is provided for each valve 24. The illustrated embodiment includes two valves 24 for each cylinder 26: one inlet valve; and one outlet valve. In an alternative embodiment more valves per cylinder may be provided for example, but not limited to, four valves per cylinder: two inlet and two outlet valves. In the illustrated embodiment, a single overhead camshaft 12 is provided, and therefore the inlet and outlet valves 24 are controlled by a single camshaft 12. The camshaft 12 may include a rocker arm (not shown) and a push rod (not shown).

In other embodiments, it is envisaged that two or more camshafts may be provided; for example, a first camshaft may be provided to actuate the inlet valves and a second camshaft may be provided to actuate the outlet valves.

It some embodiments the camshaft may be of a one-piece solid construction; in other embodiments the camshaft may be an assembled camshaft built up from multiple components.

The illustrated embodiment employs a first cam lobe 14 for a first, inlet, valve 24 and a second cam lobe 14 for a second, outlet, valve 24 for each cylinder 26, in other embodiments it is envisaged that a single cam lobe may actuate both the inlet and outlet valves.

The shape and arrangement of the cams 14 control:
i. the timing of the valve 24 opening and closing with respect to the piston 28 stroke;
ii. the timing of the inlet valve 24 opening/closing with respect to that of the outlet (exhaust) valve 24;
iii. the duration of time for which the valves 24 are open and/or closed;
iv. the degree or extent to which the valve is opened (lifted).

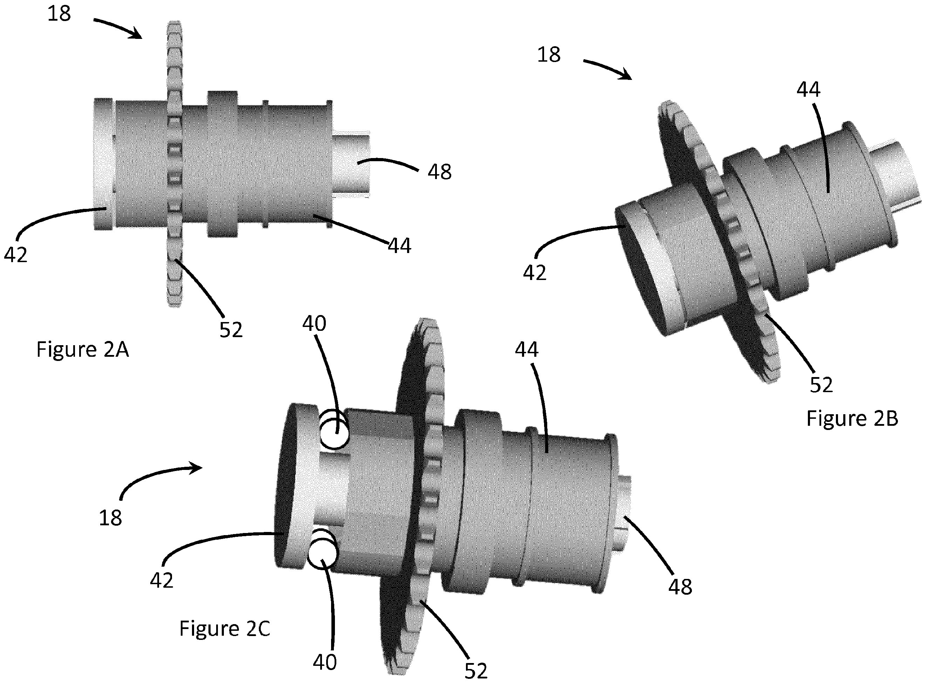

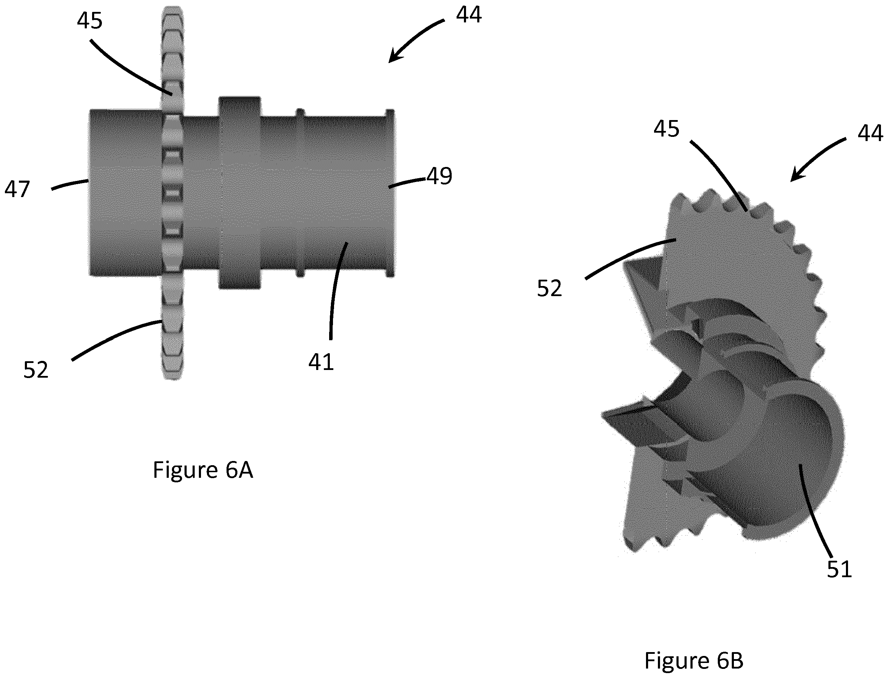

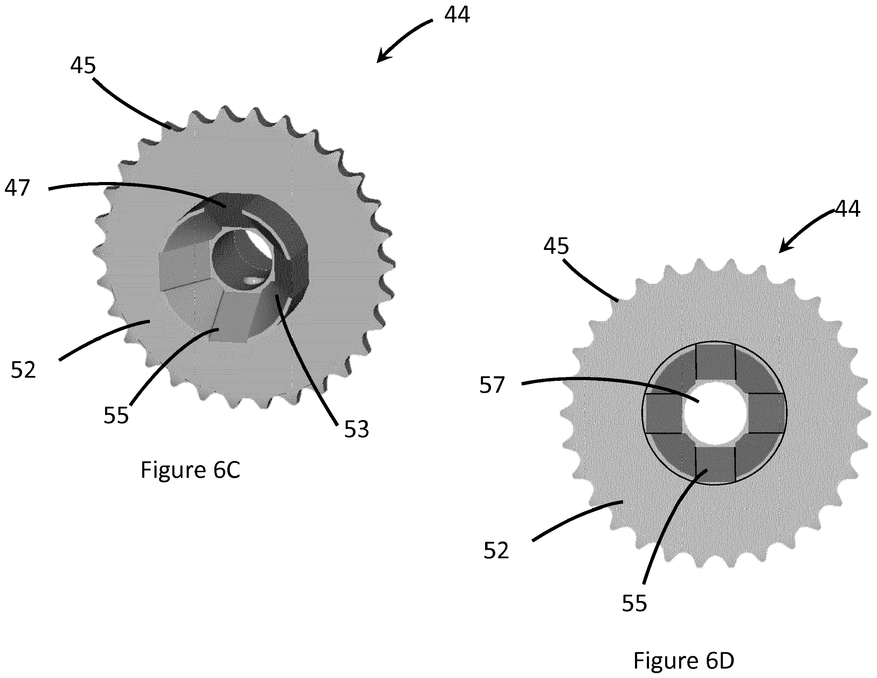

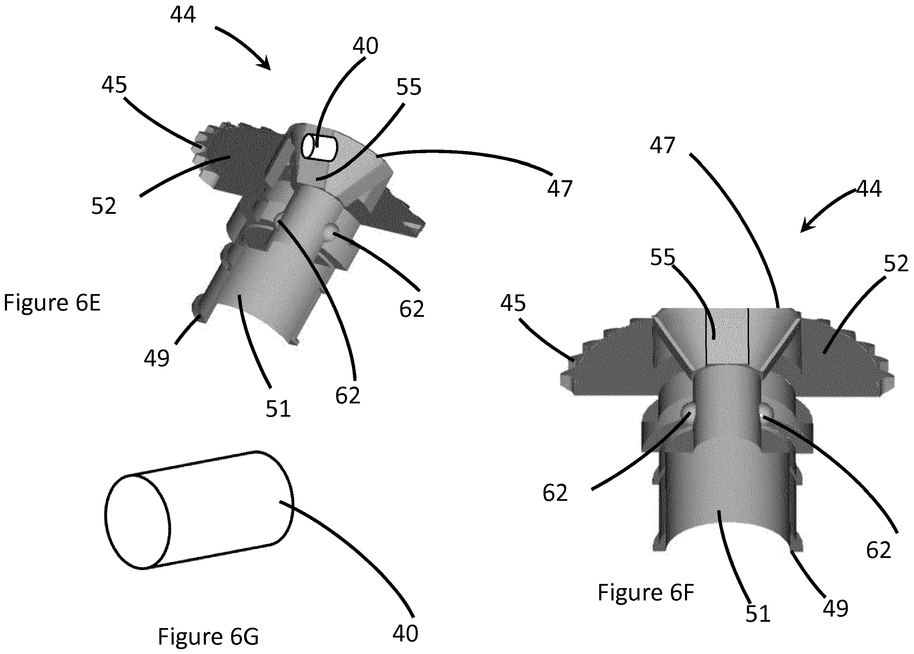

The engine 10 comprises a first gear wheel or sprocket 22 mounted to an end of the crank shaft 32. A second sprocket 52, as shown in Figure 2A, is coupled to the first sprocket 22 by a timing belt or chain 20. The second sprocket 52 comprises teeth 45 for engaging with the timing belt or chain 20 (see Figure 6A). In alternative embodiments the first sprocket 22 may be coupled to the second sprocket 52 by a pair of timing belts via a pair of intermediate gear wheels; wherein the pair of intermediate gear wheels are mounted upon a common shaft such that rotation of one of the pair of intermediate gear wheels effects rotation of the other of the pair of intermediate gear wheels. A first one of the timing belts being mounted upon the first sprocket 22 and a first one of the intermediate gearwheels, and a second one of the timing belts being mounted upon a second one of the intermediate gear wheels and the second sprocket 52. In other embodiments the timing belts or chains may be omitted, alternative connection means may be employed to connect the crank shaft 32 to the camshaft 12, for example, but not limited to, a gear system or shaft system employing gears such as but not limited to helical or bevel gears. The first sprocket and second sprocket may engage with one another directly or via one or more intermediate gears, in yet other embodiments a shaft may be employed to couple the crankshaft 32 to the camshaft 12. In other embodiments,

The second sprocket 52 forms part of a variable drive camshaft mechanism 18 which includes a first component 42 moveably mounted within a second component 44 (see Figures 2A to 2C). The first component 42 comprises a shaft 48 which extends through a channel or bore 51 provided in the second component 44 as shown in Figures 6A and 6B. Second sprocket 52 is fixedly mounted to a sleeve 41 (see Figure 6A) of the second component 44 such that rotation of the second sprocket 52 causes rotation of the sleeve 41 of the second component 44.

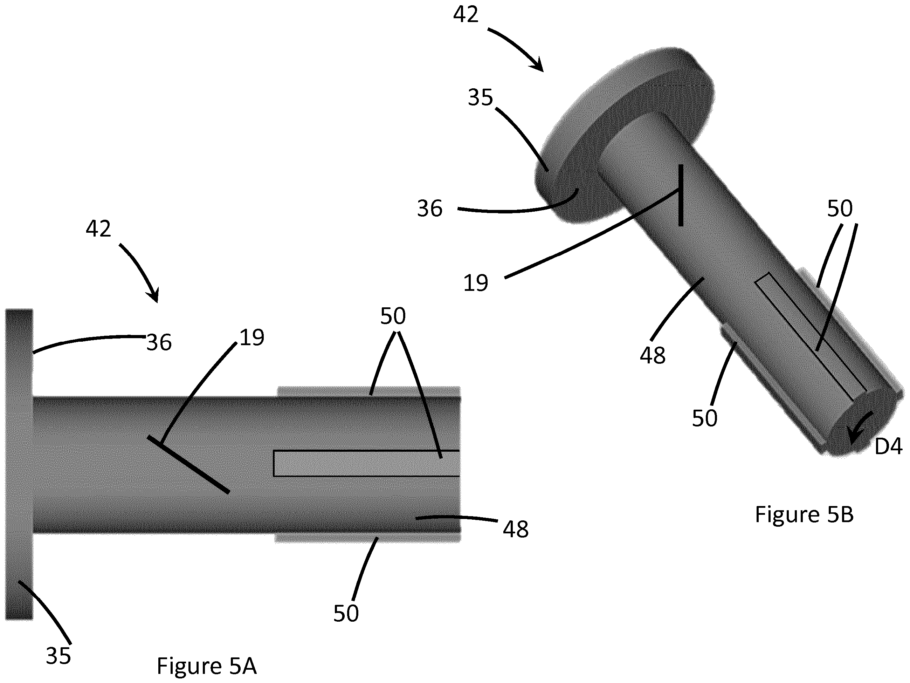

In the illustrated embodiment of Figure 1, the engine 10 is a gasoline (petrol) engine and comprises an ignition device 16, such as a spark plug. In other embodiments a diesel engine (also known as a compression-ignition engine) may be employed, the ignition device 16 shown in Figure 1 may be omitted and replaced with a glow-plug for heating the chambers of each cylinder 26 during starting. It is envisaged that the variable drive camshaft mechanism 18 may be employed with any spark ignition or compression ignition combustion engine.
Referring generally to Figures 1 to 7, construction and operation of the variable drive camshaft mechanism 18 will be described. The variable drive camshaft mechanism 18 comprises a four rollers 40 (see Figure 2C, only two rollers 40 are shown for clarity); the rollers 40 are disposed about shaft 48; the rollers 40 are arranged so as to be equally spaced about the shaft 48 at 90 degree intervals. In alternative embodiments the variable drive camshaft mechanism 18 may comprise a greater or lesser number of rollers, in those embodiments having two or more rollers 40 it is envisaged that the rollers will be equally spaced about the shaft 48, for example two rollers will be disposed at 180 degree to one another, three rollers 40 would be disposed at 120 degree to one another. The first component 42 comprises a head 35 as shown in Figures 5A and 5B. The head 35 comprises an inner surface 36 against which the rollers 40 may be brought to bear. The sleeve 41 of second component 44 comprises a first end 47 (see Figures 6A to 6D). The first end 47 of the sleeve 41 is countersunk, that is to say it comprises a conical hole, so as to define a recess 53 in the walls of the sleeve 41 of the second component 44. The recess 53 is arranged to accommodate the rollers 40. The recess 53 comprises four channels or tracks 55, which each define an incline or ramp (see Figure 6C). The rollers 40 are located within the tracks 55; the tracks 55 restrict the motion of the rollers 40 such that they may only move radially, inwardly or outwardly, guided by the tracks 55 and cannot move circumferentially about the recess 53. In other embodiments it is envisaged that the number of channels or tracks will be equal to the number of rollers 40.

In other embodiments the rollers 40 may be replaced with alternative actuators which act upon the head 36 of the first component 42 as a result of the centrifugal force experienced by the actuator in response to rotation of the variable drive camshaft mechanism 18; in one embodiment the rollers 40 may be replaced with spherical masses such as ball bearings.

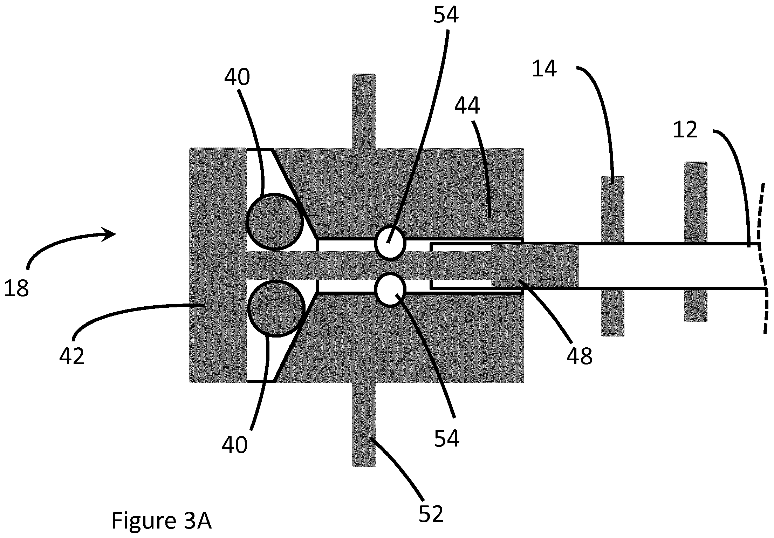

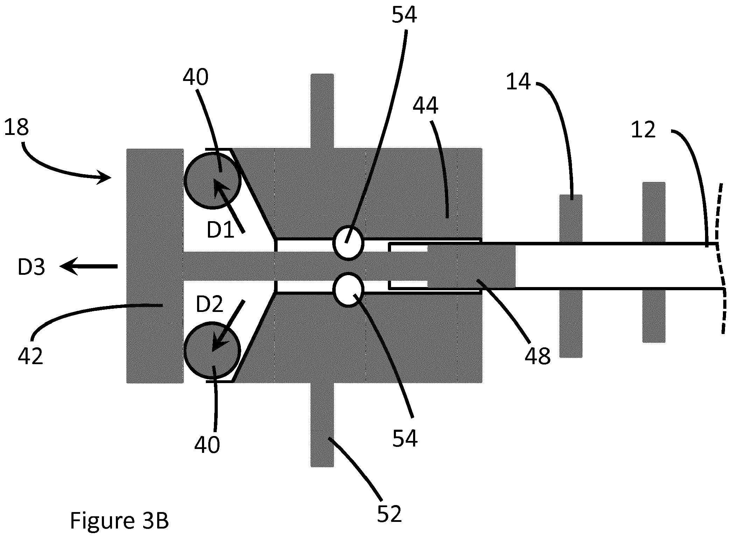

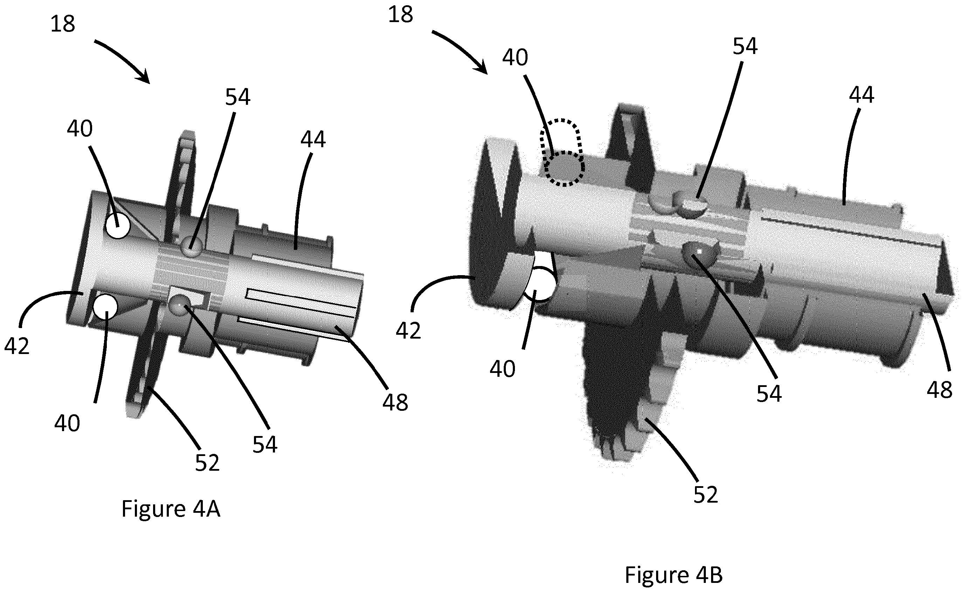

The walls of the sleeve 41 comprise a pair of pits 62 (see Figures 6E and 6F). Optionally the pits 62 are hemispherical in shape. The pits 62 are each arranged to receive an outer portion of a ball bearing 54 (see Figures 3A, 3B, 4A and 4B). The pits 62 are disposed internally of the sleeve 41, within the bore 51. The pits 62 retain the ball bearings 54 when the shaft 48 of the first component 42 is inserted into the bore 51 of the second component 44. The pits 62 are arranged to be disposed on opposing sides of the shaft 48. In alternative embodiments a greater or lesser number of pits 62, may be provided; the one or more pits 62 being arranged so as to be equidistant about the circumference of the bore 51.

The shaft 48 of the first component 42 comprises a pair of grooves 19 (see Figures 1, 4A, 4B, 5A, 5B and 7) disposed on the outer surface thereof. The grooves 19 are each arranged to receive a portion of a ball bearing 54 that is disposed more internally of the variable drive camshaft mechanism 18 than the pits 62. The arrangement of the pits 62, grooves 19 and ball bearings 54 couples the first component 42 to the second component 44, such that when the sprocket 52, and hence second component 44, is rotated by the timing belt or chain 20 the first component 42 is also caused to rotate. The ball bearings 54 transfer drive (rotational force) from the second component 44 to the first component 42. The ball bearings 54, pits 62 and groove 19 create a detent which causes the first component 42 to rotate when the second component 44 is driven rotationally.

In alternative embodiments other arrangements are envisaged, for example the pits 62 and ball bearing may be replaced with one or more protrusions or lugs extending radially inward from the inner surface of the bore 51 which one or more lugs engages with a respective groove 19. It will be appreciated that in other embodiments, the lugs may be provided on the first component 42 and the respective grooves 19 may be defined on the inner surface of the bore 51 of the second component 44. In other words the mechanism for transferring torque may be inverted.

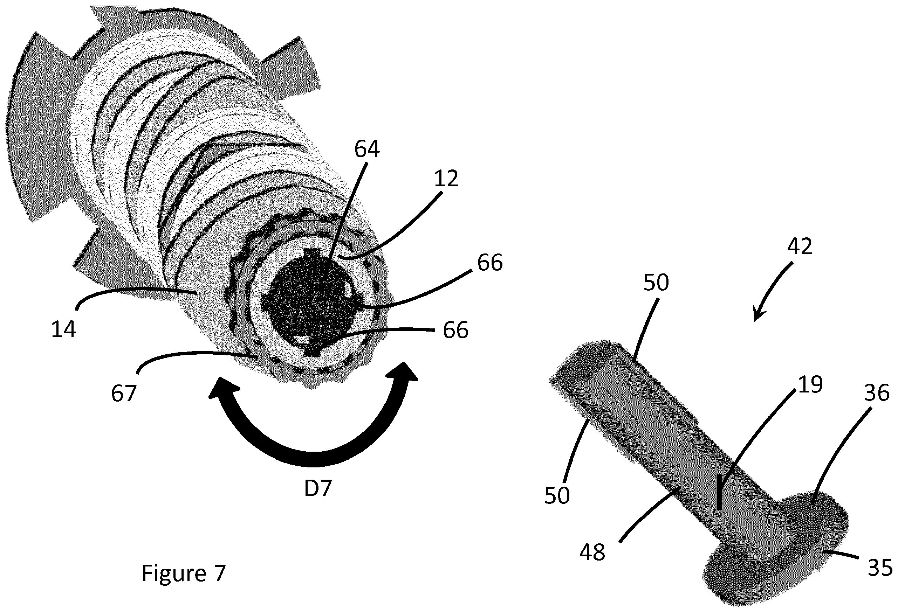

The first component 42 comprises a spline which includes four ridges 50 on an outer surface of the shaft 48 (see Figure 5A). The camshaft 12 comprises a bore or channel 64 defining an internal surface. The ridges 50 each mesh with a groove 66 on the internal surface of the camshaft 12 and transfer drive or rotational force to the camshaft 12 thereby maintaining the angular correspondence between the first component 42 and camshaft 12. In alternative embodiments a great or lesser number of ridges 50 and grooves 66 may be provided as desired. The camshaft 12 comprises a bearing 67 mounted thereon. The bearing 67 allows the camshaft 12 to rotate freely (as indicated by direction arrow D7 in Figure 7), with respect to the second component 44. A second end 49 of the second component (shown in Figures 6E and 6F) is arranged to receive a portion of the camshaft 12.

When the engine 10 is operational the crank shaft 32 converts the linear motion of the pistons 28 into a rotatory motion. Rotational drive is provided to the first sprocket 22 by the crank shaft 32. The first sprocket 22 drives the chain 20 which in turn rotates the second component 44.

As the engine speed is increased, the number of revolutions per minute of the crank shaft 32 is increased, (this is achieved by increasing the charge (fuel/air mixture) injected into the cylinders 26) and the first sprocket 22 is rotated faster. This in turn leads to an increase in the rotational speed of the second sprocket 52. The variable drive camshaft mechanism 18 is therefore rotated faster. As the rotational speed increases, the rollers 40 move radially outwardly along the inclined ramps 55 defined in the second component 44, as shown by direction arrows D1 and D2 in Figure 3B. The rollers 40 act upon the inner surface 36 of the head 35 of the first component 42. In doing so, the rollers 40 push the first component 42 in an axial direction as indicated by direction arrow D3. The radial outward movement of the rollers 40 can be considered to be as a consequence of a centrifugal force (or a centripetal force depending upon the frame of reference) acting upon the rollers 40.

When the rollers 40 push the first component 42 axially outward, the ball bearing 54 disposed in the groove 19 follows the groove 19. In the illustrated embodiment, the groove 19 is arranged to rotate the first component 42 in response to the rollers 40 pushing the first component 42 axially. The groove 19 is helically arranged to form a screw. The length of the groove 19 and the angular orientation (lead) of the groove 19 determine the angle through which the first component 42 is rotated with respect to the second component 44.

In this way, the variable drive camshaft mechanism 18 can rotate the camshaft 12 and hence the cams 14 such that the timing of the valves 24 can be advanced or retarded with respect to the piston cycle. Consequently, the valves 24 can be opened, or closed, sooner, or later, with respect to a predefined position of the piston in the cylinder, for example top dead centre or bottom dead centre.

The groove 19 comprises a first end C and a second end O, when the ball bearing 54 is disposed at the first end C the first component 42 is arranged in a closed position with respect to the second component 44. When the ball bearing 54 is disposed at the second end C the first component 42 is arranged in an open position with respect to the second component 44. The first component 42 illustrated in Figures 5A and 5B rotates in a clockwise or anticlockwise direction relative to the second component 44 the direction of rotation will be dependent upon the direction of rotation of the crankshaft 32, as indicated by direction arrow D4. The ball bearing 54 is initially disposed at the second end C of the groove 19 which is disposed closest to the head 35. The rollers 40 are initially disposed in close proximity or contact with the shaft 48. As the speed of rotation of the variable drive camshaft mechanism 18 increases due to increase rotational speed of the crankshaft 32 the rollers 40 move radially outward, applying force to the head 35 in direction along the axis of the shaft 48 so as to move the first component axially until the ball bearing 54 reaches the second end of the groove 19.

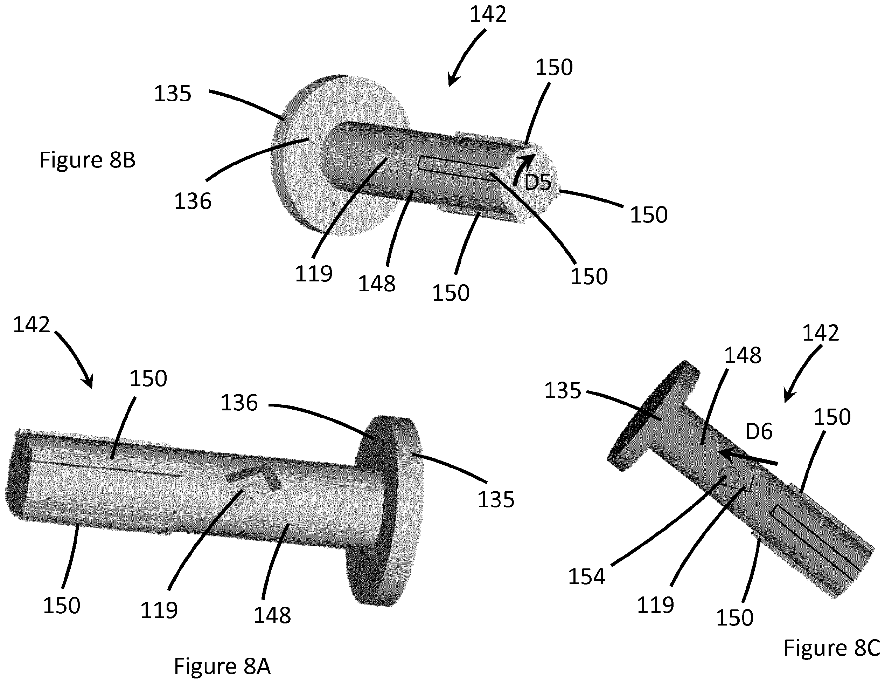

Referring now to Figures 8A, 8B and 8C there is shown an alternative embodiment of the variable drive camshaft mechanism 18 of the present invention. In this alternative illustrated embodiment, like numerals have, where possible, been used to denote like parts, albeit with the addition of the prefix "100" to indicate that these features belong to the alternative embodiment.

Figures 8A, 8B and 8C illustrate an alternative first component 142 in which the groove 119 has been orientated oppositely to that of Figures 5A and 5B. The alternative first component 142 may be employed with the second component 44 of Figure 6A. The groove 119 is substantially shaped to be substantially arcuate in shape, optionally hemi-spherical, so as to accommodate the ball bearing 154 and of sufficient depth to receive a portion of the ball bearing 154. The ends of the groove 119 are arcuate or curved so as to be complementary to the ball bearing 154. The first component 142 illustrated in Figures 8A, 8B and 8C rotates in a clockwise or anticlockwise direction relative to the second component 44, dependent upon the direction of rotation of the crankshaft 32, as indicated by direction arrow D5. It will be appreciated that for a given direction of rotation of the crankshaft 32, the groove 119 of first component 142 of Figures 8A, 8B and 8C is arranged to effect a rotation of the first component 142 with respect to the second component 44 in an direction opposite to the direction for which the first component 42 of Figures 5A and 5B rotates with respect to the second component 44 for the same direction of rotation of the crankshaft 32. Again it is envisaged that the ball bearing 154 is initially disposed at the end of the groove 119 disposed closest to the head 135 and moves as indicated by direction arrow D6 to the opposing end of the groove 119 as shown in Figure 8C. The spline 150 which couples the first component 142 to the camshaft (not shown) rotation of the first component 142 with respect to the second component effects a rotation of the camshaft this rotation of the camshaft can be employed to adjust the valve timing for example to advance or retard the valve timing with respect to the piston position.

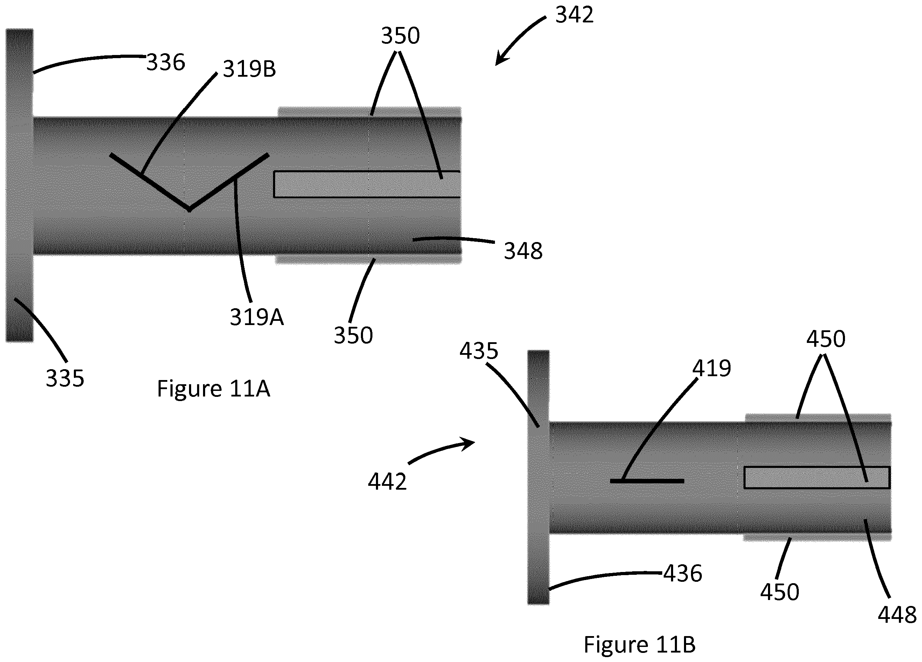

Referring now to Figures 11A and 11B there are shown further alternative embodiments of the variable drive camshaft mechanism 18 of the present invention. In these further alternative illustrated embodiments, like numerals have, where possible, been used to denote like parts, albeit with the addition of the prefix "300" or "400" to indicate that these features belong to the further alternative embodiments respectively.

Figure 11A illustrates a first component 342 in which the groove 319A/319B comprises a first portion 319A which effects a rotation of the first component 342 in a first direction. The groove 319A/319B comprises a second portion 319B which effects a rotation of the first component 342 in a second direction opposite to the first direction. In this way when the rollers (not shown) push against the head 335 the first component 342 initially rotates in the first direction. As the rollers 40 continue to push against the head 335, the ball bearing 54 follows the second portion 319B and rotates the first component 342 in the second direction. It will be appreciated that first and second portions 319A, 319B are arranged to bring the first component 342, and hence camshaft 12, back to its starting position when the ball bearing 54 reaches the end of the second portion 319B. However, in alternative embodiments, the end stop of the second portion 319B may be arranged differently. It will also be appreciated that whilst in the illustrated embodiment the groove 319A/319B is symmetrical in other embodiments it may be arranged differently the first portion 319A may be longer or shorter in length than the second portion 319B; the angular orientation (lead) of the first portion 319A may be different to that of the second portion 319B.

Figure 11B illustrates a first component 442 in which the groove 419 is substantially parallel to a longitudinal axis of the shaft 448. In this embodiment when the rollers push against the head 435 the first component 442 is moved axially, there is no rotation relative to the second component (not shown). First component 442 may be coupled to a camshaft (not shown) in which the profile or shape of the, or each, cam changes in an axial direction. In this way, when the rollers (not shown) push against the head 435, the variable drive camshaft mechanism allows the axial position on the cam which the valve stem (or push rod or other cam follower) makes contact with the cam to be changed. The cam profile may vary along it axial length such that a different profile of the cam may be used to lift the valve the portion of the cam and hence profile being employed being dependent upon the engine speed.

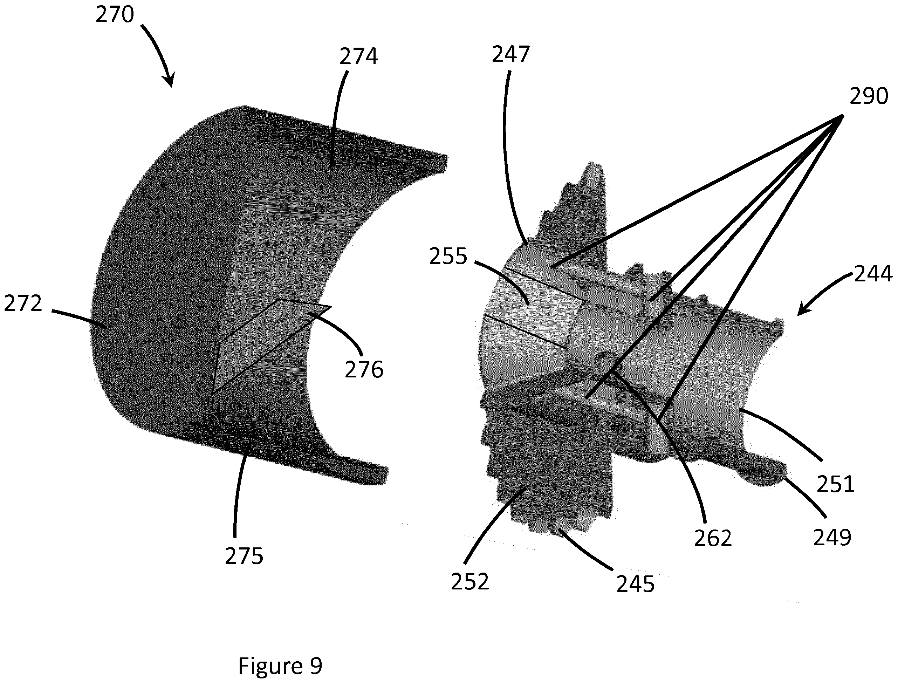

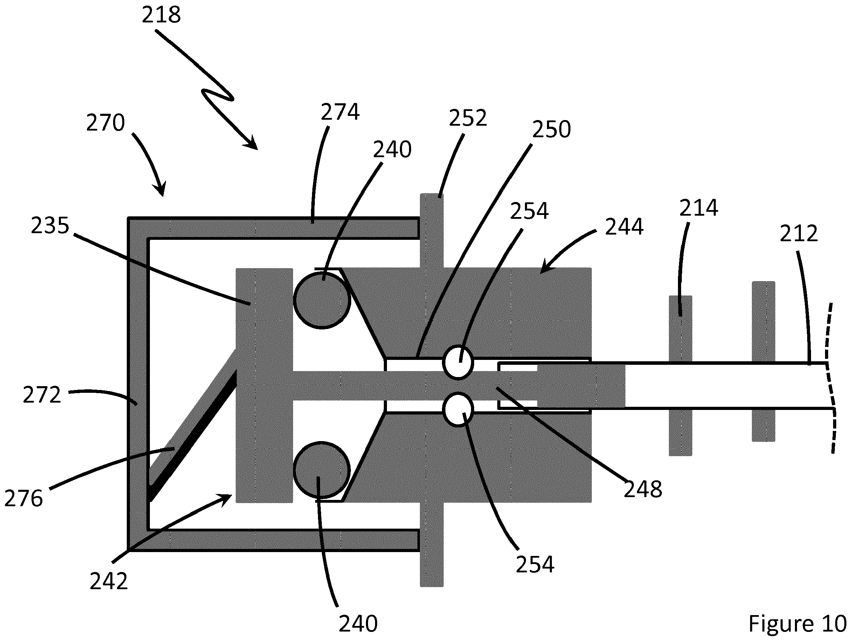

Referring now to Figures 9 and 10, there is shown a still further alternative embodiment of the variable drive camshaft mechanism of the present invention. In this illustrated embodiment, like numerals have, where possible, been used to denote like parts, albeit with the addition of the prefix "200" to indicate that these features belong to the still further alternative embodiment.

Figures 9 and 10 show a variable camshaft drive mechanism 218 in which an end cap 270 is provided. End cap 270, along with the second sprocket 252, encloses the head 235 of the first component 242 and the first end 247 of the second component 244. The end cap restricts the movement of the first component 242 with respect to the second component 244 preventing the first component 242 from being separated from the second component 244 and retaining the rollers 240 therebetween. The end cap prevents or reduces the ingress of dirt or other foreign objects into the variable camshaft drive mechanism 218. The end cap 270 comprises an end wall 272 and side walls 275, the end cap 270 is a cylindrical tube closed at one end by the end wall 272. The end cap 270 provides a chamber 274 in which lubricant (not shown) such as oil can be retained. The end cap 270 comprises a resilient biasing means in the form of a bi-metallic spring 276. A first end of the bi-metallic spring 276 is mounted to the interior of the end cap 270. A second end is in contact with the head 235 of the first component 242. The bi-metallic spring 276 biases the first component 242 so as to encourage the shaft 248 into the bore 250 of the second component 244. The bi-metallic spring 276 encourages the rollers 240 radially inwards towards the shaft 248 of the first component 242.

In order for the shaft 248 of the first component 242 to withdraw from the bore 250 of the second component 244, the rollers 240 must apply sufficient force to the head to overcome the bias of the bi-metallic spring 276 in addition to any other forces, such as, but not limited, to frictional forces.

The second component 244 comprises a plurality of channels 290 which allow engine oil to enter the chamber formed by the end cap 270. The engine oil transfers heat to the bi-metallic spring 276. Heat from the engine oil is transferred to each of the metals forming the bi-metallic spring 276 at different rates and causes them to expand by different amounts thereby changing the shape of the bi-metallic spring 276 and the force applied by it.

In one application it is envisaged that when the engine starts up and is cold the timing of the camshaft 212, and hence the valves (not shown), may be advanced or retarded with respect to piston position to optimise engine performance or emissions. As the engine warms up the bi-metallic spring 276 will exert sufficient force upon the first component 242, overcoming the force from the rollers 240 to rotate the first component 242 and camshaft 212 to operate the cams 214 and hence the valves with a different timing with respect to the piston position, and thereby optimise engine performance or emissions.

It can be appreciated that various changes may be made within the scope of the present invention, for example, in other embodiments of the invention it is envisaged that in embodiments having a first camshaft actuating the inlet valves and a second camshaft actuating the outlet valves each camshaft can be provided with a variable drive camshaft mechanism 18 such that the degree of overlap, when the inlet and outlet valves are open at the same time can be varied with engine speed.

It is envisaged that the variable camshaft drive mechanism may comprise a spring return mechanism or other suitable biasing means which acts upon the rollers to return them to their start position adjacent the shaft of the first component, it will be appreciated that in order to move radially outward the rollers would need to overcome the bias of spring return mechanism, and that the variable camshaft drive mechanism may be tuned to operate at a specific predetermined rotational speed dependent upon the biasing force exerted by the spring return mechanism which needs to be overcome.

Whilst the foregoing embodiments describe a linear ramp it is envisaged that the rolling surface, provided by the second component, upon which the roller are in contact may have any desired profile, which may be non-linear, such that the amount of axial movement of the first component for a given amount of radial movement of the roller is not constant but rather varies over the radial travel of the roller.
Furthermore, in other embodiments the specific form and number of rollers 40 may vary.

Optionally, the rollers 40 are cylindrical and smooth and optionally at least two rollers 40 are used. However, in other embodiments one or more rolling members that are configured to travel toward the head and force the head of the first component axially outward may be used. The rollers need not be restricted to radially movement by the channels 55 but may be arranged to follow a spiral path, the rollers may be tapered in shape to facilitate such spiral movement. The diameter of the rollers may vary long their axial length; such variations in diameter may be stepwise or continuous. It is envisaged that the channels 55 will be shaped complementarily to the rollers 40.

The groves 19, 119, 319, 319B are described as being disposed on the outer surface of the first component 42. The term "groove" refers to all manner of formations which facilitate the guided movement of a ball bearing or other follower, such that with increasing or decreasing acceleration of the rollers/rolling means, movement of the second component can be adjusted or modified with respect to the movement of the first component.. However any reference to groove should not be construed as necessarily referring to a single groove only, indeed as depicted in Figure 11A the groove may comprise two or more portions each angled with respect to another portion. Furthermore any reference to groove should not be construed as being a straight-edged groove.

It should be understood that because the groove has a depth, the phrase "disposed on the outer surface of the first component" is intended to include grooves formed within the material forming the outer-side of the first component.

Whilst the foregoing embodiments have been described in reference to a combustion engine have an overhead camshaft; is envisaged that in alternative embodiments the combustion engine may have an alternative configuration such as but not limited to cam in block configurations for example, overhead valve (push rod) configuration or side valve configuration.

## Claims

1. A device for effecting relative rotation of two components of a rotary shaft comprising:
a first component (42, 142, 242, 342, 442) having a shaft (48, 148, 248, 348, 448) and a head (35, 135, 235, 335, 435);
a second component (44, 244) having a first end (47, 247) and a second end and a bore (51, 250) extending longitudinally therethrough;
the shaft (48, 148, 248, 348, 448) of the first component being inserted into the bore (51, 250) of the second component; and the device comprising:
a detent for coupling the first component (42, 142, 242, 342, 442) to the second component such that rotation of the second component (44, 244) causes the first component to rotate; and
one or more actuators disposed in between the head (35, 135, 235, 335, 435) of the first component and the first end (47, 247) of the second component;
wherein in response to rotation of the second component (44, 244), about a longitudinal axis, a centrifugal effect causes the actuators to act upon the head (35, 135, 235, 335, 435) of first component to move it axially with respect to the second component (44, 244); and
wherein the device comprises a bi-metallic spring (276) resiliently biased against the first component (42, 142, 242, 342, 442) to resist the axial movement of the first component (42, 142, 242, 342, 442) with respect to the second component (44, 244), the resilience of the bi-metallic spring (276) being dependent upon temperature.

2. A device according to claim 1 wherein, the first end (47, 247) of the second component is countersunk so as to define inclined ramps in walls of the second component and the actuators comprise one or more rollers (40, 240) disposed in between the head (35, 135, 235, 335, 435) of the first component and the first end (47, 247) of the second component in rolling contact with the inclined ramps.

3. A device according to claim 1 or claim 2, wherein the detent comprises a groove (19, 66, 119, 319A/319B, 419) and a bearing (54, 67,154) seated therein, the groove arranged to effect a rotation of the first component (42, 142, 242, 342, 442) with respect to the second component (44, 244) as the first component is moved axially with respect to the second component.

4. A device according to claim 1 or claim 2 wherein the detent comprises a groove (19, 66, 119, 319A/319B, 419) and a bearing (54, 67,154) seated therein, the groove arranged parallel to a longitudinal axis of the shaft of the first component (42, 142, 242, 342, 442) so as to restrict movement of the first component to be axially within the bore (51, 250) of the second component (44, 244).

5. A device according to any preceding claim wherein the bi-metallic spring (276) is disposed in thermal contact with a reservoir of liquid and wherein in response to a change in the temperature of the liquid in the reservoir, the resilience of the bi-metallic spring (276) changes and thereby the device can be de-activated by the bi-metallic spring (276) at certain temperatures.

6. A device according to claim 2, or any claim dependent thereon, wherein the inclined ramps comprise one or more tracks defined in and extending radially across the walls (275) of the second component (244), each track being configured to receive a portion of a roller (240) to restrict movement of the roller such that the roller cannot move circumferentially.

7. A device according to any of claims 1 to 6 wherein the first component comprises a spline for coupling to a camshaft (12, 212) to effect rotation thereof.

8. A variable drive mechanism (18, 218) for a camshaft (12, 212) comprising:
a device according to any one of claims 1 to 6, wherein the shaft (48, 148, 248, 348, 448) of the first component comprises a spline for coupling the first component to a camshaft, and the second component (44, 244) comprises a sprocket for being coupled to a crankshaft to effect rotation of the second component.

9. An engine (10) for a vehicle comprising:
one or more cylinders (26);
the or each cylinder comprising a piston (28) slideably mounted therein;
the or each piston being coupled to a crankshaft (32) by a connecting rod (30);
a first sprocket (22) mounted upon the crankshaft (32);
the or each cylinder comprising one or more openings;
the or each opening comprising a valve (24) for closing the opening;
a camshaft comprising one or more cams (14) for actuating a respective valve (24); and
a variable drive mechanism (18, 218) according to claim 8 coupled to the camshaft (12, 212); wherein the sprocket (52) at the second component is coupled to the first sprocket (22) such that rotation of the crankshaft effects rotation of the second component;
the engine (10) being configured such that in response to rotation of the second component (44, 244), about a longitudinal axis, a centrifugal effect causes the actuators to act upon the head (35, 135, 235, 335, 435) of the first component to move it axially with respect to the second component (44, 244) whereby changing a control parameter of the operation of the or each valve (24);

10. An engine according to claim 9 comprising a variable drive mechanism (18, 218) according to claim 8 when depending through claim 2, wherein the groove is arranged to effect a rotation of the first component (42, 142, 242, 342, 442) with respect to the second component (44, 244) as the first component is moved axially with respect to the second component so as to advance or retard the opening or closing of the or each valve (24) with respect to a predefined position of a respective piston (28) within its respective cylinder (26).

11. An engine according to claim 9 or claim 10, wherein each cylinder (26) comprises at least two openings each having a valve (24), wherein at least one valve is an inlet valve for allowing insertion of charge into the cylinder, and at least one valve is an outlet valve for allowing egress of exhaust gases, the engine (10) comprising a first camshaft (12, 212) having at least one cam for actuating a respective one of the at least one inlet valves and a second cam shaft having at least one cam for actuating a respective one of the at least one outlet valves, each camshaft comprising a variable drive mechanism coupled thereto, wherein each variable drive mechanism (18, 218) can advance or retard the opening or closing of the or each of the respective valves to which it is coupled with respect to a predefined position of a respective piston (28) within its respective cylinder (26), in this way the period or time when both the inlet valves and the outlet valves are open or closed simultaneously can be controlled dependent upon rotational speed of the crankshaft (32).

12. An engine according to claim 11 wherein at least one valve (24) mounted upon the camshaft (12, 212) comprises a profile which changes in an axial direction such that an axial movement of the camshaft effects a change in the cam profile with a change in the rotational speed of the crankshaft (18, 218).

13. A vehicle comprising the device of any of claims 1 to 7, the variable drive mechanism (18, 218) of claim 8 or the engine (10) of any of claims 9 to 12.

## Patentansprüche

1. Vorrichtung zum Bewirken von relativer Drehung zweier Bestandteile einer Radialwelle, Folgendes umfassend:
einen ersten Bestandteil (42, 142, 242, 342, 442) mit einer Welle (48, 148, 248, 348, 448) und einem Kopf (35, 135, 235, 335, 435);
einen zweiten Bestandteil (44, 244) mit einem ersten Ende (47, 247) und einem zweiten Ende und einer Bohrung (51, 250), die sich längst dahindurch erstreckt;
wobei die Welle (48, 148, 248, 348, 448) des ersten Bestandteils in die Bohrung (51, 250) des zweiten Bestandteils eingesetzt wird; und die Vorrichtung Folgendes umfasst:
eine Raste zum Koppeln des ersten Bestandteils (42, 142, 242, 342, 442) an den zweiten Bestandteil, sodass eine Drehung des zweiten Bestandteils (44, 244) bewirkt, dass sich der erste Bestandteil dreht; und
einen oder mehrere Antriebe, die zwischen dem Kopf (35, 135, 235, 335, 435) des ersten Bestandteils und dem ersten Ende (47, 247) des zweiten Bestandteils angeordnet sind;
wobei eine zentrifugale Wirkung als Reaktion auf eine Drehung des zweiten Bestandteils (44, 244) um eine Längsachse herum bewirkt, dass die Antriebe auf den Kopf (35, 135, 235, 335, 435) des ersten Bestandteils wirken, um ihn bezogen auf den zweiten Bestandteil (44, 244) axial zu bewegen; und
wobei die Vorrichtung eine Bi-Metall-Feder (276) umfasst, die gegen den ersten Bestandteil (42, 142, 242, 342, 442) elastisch vorgespannt ist, um der axialen Bewegung des ersten Bestandteils (42, 142, 242, 342, 442) bezogen auf den zweiten Bestandteil (44, 244) zu widerstehen, wobei die Spannkraft der Bi-Metall-Feder (276) von der Temperatur abhängig ist.

2. Vorrichtung nach Anspruch 1, wobei das erste Ende (47, 247) des zweiten Bestandteils versenkt ist, um geneigte Rampen in Wänden des zweiten Bestandteils zu definieren, und die Antriebe eine oder mehrere Rollen (40, 240) umfassen, die zwischen dem Kopf (35, 135, 235, 335, 435) des ersten Bestandteils und dem ersten Ende (47, 247) des zweiten Bestandteils in rollendem Kontakt mit den geneigten Rampen angeordnet sind.

3. Vorrichtung nach Anspruch 1 oder 2, wobei die Raste eine Rille (19, 66, 119, 319A/319B, 419) und ein darin sitzendes Lager (54, 67, 154) umfasst, wobei die Rille angeordnet ist, eine Drehung des ersten Bestandteils (42, 142, 242, 342, 442) bezogen auf den zweiten Bestandteil (44, 244) zu bewirken, während der erste Bestandteil bezogen auf den zweiten Bestandteil axial bewegt wird.

4. Vorrichtung nach Anspruch 1 oder 2, wobei die Raste eine Rille (19, 66, 119, 319A/319B, 419) und ein darin sitzendes Lager (54, 67, 154) umfasst, wobei die Rille parallel zu einer Längsachse der Welle des ersten Bestandteils (42, 142, 242, 342, 442) angeordnet ist, um eine Bewegung des ersten Bestandteils zu beschränken, um in der Bohrung (51, 250) des zweiten Bestandteils (44, 244) axial zu sein.

5. Vorrichtung nach einem der vorhergehenden Ansprüche, wobei die Bi-Metall-Feder (276) in thermischer Berührung mit einem Flüssigkeitsbehälter angeordnet ist und wobei sich die Spannkraft der Bi-Metall-Feder (276) als Reaktion auf eine Veränderung in der Temperatur der Flüssigkeit in dem Behälter verändert und dadurch die Vorrichtung durch die Bi-Metall-Feder (276) bei bestimmten Temperaturen deaktiviert werden kann.

6. Vorrichtung nach Anspruch 2 oder einem beliebigen davon abhängigen Anspruch, wobei die geneigten Rampen eine oder mehrere Spuren umfassen, die in den Wänden (275) des zweiten Bestandteils (244) definiert sind und sich radial darüber erstrecken, wobei jede Spur konfiguriert ist, einen Abschnitt einer Rolle (240) aufzunehmen, um eine Bewegung der Rolle derart zu beschränken, dass sich die Rolle nicht umlaufend bewegen kann.

7. Vorrichtung nach einem der Ansprüche 1 bis 6, wobei der erste Bestandteil einen Schiebekeil zum Koppeln an eine Nockenwelle (12, 212) umfasst, um eine Drehung davon zu bewirken.

8. Variabler Antriebsmechanismus (18, 218) für eine Nockenwelle (12, 212), Folgendes umfassend:
eine Vorrichtung nach einem der Ansprüche 1 bis 6, wobei die Welle (48, 148, 248, 348, 448) des ersten Bestandteils einen Schiebekeil zum Koppeln des ersten Bestandteils an eine Nockenwelle umfasst, und der zweite Bestandteil (44, 244) ein Kettenrad umfasst, um an eine Kurbelwelle gekoppelt zu werden, um eine Drehung des zweiten Bestandteils zu bewirken.

9. Motor (10) für ein Fahrzeug, Folgendes umfassend:
einen oder mehrere Zylinder (26);
wobei der oder jeder Zylinder einen Kolben (28) umfasst, der darin gleitfähig gelagert ist;
wobei der oder jeder Kolben durch einen Verbindungsstab (30) an eine Kurbelwelle (32) gekoppelt ist;
ein erstes Kettenrad (22), das auf der Kurbelwelle (32) gelagert ist;
wobei der oder jeder Zylinder eine oder mehrere Öffnungen umfasst;
wobei die oder jede Öffnung ein Ventil (24) zum Schließen der Öffnung umfasst;
eine Nockenwelle, die eine oder mehrere Nocken (14) zum Betreiben eines jeweiligen Ventils (24) umfasst; und
einen variablen Antriebsmechanismus (18, 218) nach Anspruch 8, der an die Nockenwelle (12, 212) gekoppelt ist; wobei das Kettenrad (52) an dem zweiten Bestandteil an das erste Kettenrad (22) gekoppelt ist, sodass eine Drehung der Kurbelwelle eine Drehung des zweiten Bestandteils bewirkt;
wobei der Motor (10) derart konfiguriert ist, dass eine zentrifugale Wirkung als Reaktion auf eine Drehung des zweiten Bestandteils (44, 244) um eine Längsachse bewirkt, dass die Antriebe auf den Kopf (35, 135, 235, 335, 435) des ersten Bestandteils wirken, um ihn bezogen auf den zweiten Bestandteil (44, 244) axial zu bewegen, wodurch ein Steuerparameter des Betriebs des oder jedes Ventils (24) verändert wird;

10. Motor nach Anspruch 9, einen variablen Antriebsmechanismus (18, 218) nach Anspruch 8, wenn abhängig von Anspruch 2, umfassend, wobei die Rille angeordnet ist, eine Drehung des ersten Bestandteils (42, 142, 242, 342, 442) bezogen auf den zweiten Bestandteil (44, 244) zu bewirken, während der erste Bestandteil bezogen auf den zweiten Bestandteil axial bewegt wird, um das Öffnen oder Schließen des oder jedes Ventils (24) bezogen auf eine vorgegebene Position eines jeweiligen Kolbens (28) in seinem jeweiligen Zylinder (26) vorwärts zu bringen oder zu verlangsamen.

11. Motor nach Anspruch 9 oder 10, wobei jeder Zylinder (26) wenigstens zwei Öffnungen umfasst, wobei jede ein Ventil (24) aufweist, wobei wenigstens ein Ventil ein Einlassventil zum Ermöglichen eines Einsetzens von Ladung in den Zylinder ist, und wenigstens ein Ventil ein Auslassventil zum Ermöglichen eines Abzugs von Abgasen ist, wobei der Motor (10) eine erste Nockenwelle (12, 212) mit wenigstens einer Nocke zum Antreiben eines jeweiligen des wenigstens einen Einlassventils und eine zweite Nockenwelle mit wenigstens einer Nocke zum Antreiben eines jeweiligen des wenigstens einen Auslassventils umfasst, wobei jede Nockenwelle einen daran gekoppelten variablen Antriebsmechanismus umfasst, wobei jeder variable Antriebsmechanismus (18, 218) das Öffnen oder Schließen des jeweiligen Ventils, an das er bezogen auf eine vorgegebene Position eines jeweiligen Kolbens (28) in seinem jeweiligen Zylinder (26) gekoppelt ist, vorwärts bringen oder verlangsamen kann, wodurch der Zeitraum oder der Zeitpunkt, wenn sowohl die Einlassventile als auch die Auslassventile gleichzeitig geöffnet oder geschlossen werden, abhängig von der Drehgeschwindigkeit der Kurbelwelle (32) gesteuert werden können.

12. Motor nach Anspruch 11, wobei wenigstens ein Ventil (24), das auf der Nockenwelle (12, 212) gelagert ist, ein Profil umfasst, das sich in einer axialen Richtung verändert, sodass eine axiale Bewegung der Nockenwelle eine Veränderung in dem Nockenprofil mit einer Veränderung in der Drehgeschwindigkeit der Kurbelwelle (18, 218) bewirkt.

13. Fahrzeug, die Vorrichtung nach einem der Ansprüche 1 bis 7, den variablen Antriebsmechanismus (18, 218) nach Anspruch 8 oder den Motor (10) nach einem der Ansprüche 9 bis 12 umfassend.

## Revendications

1. Dispositif pour effectuer une rotation relative de deux composants d'un arbre rotatif comprenant :
un premier composant (42, 142, 242, 342, 442) ayant un arbre (48, 148, 248, 348, 448) et une tête (35, 135, 235, 335, 435) ;
un second composant (44, 244) ayant une première extrémité (47, 247) et une seconde extrémité et un alésage (51, 250) le traversant longitudinalement ;
l'arbre (48, 148, 248, 348, 448) du premier composant étant inséré dans l'alésage (51, 250) du second composant ; et le dispositif comprenant :
un encliquetage pour couplage du premier composant (42, 142, 242, 342, 442) au second composant de telle sorte qu'une rotation du second composant (44, 244) amène le premier composant à tourner ; et
un ou plusieurs actionneurs disposés entre la tête (35, 135, 235, 335, 435) du premier composant et la première extrémité (47, 247) du second composant ;
dans lequel en réponse à une rotation du second composant (44, 244), autour d'un axe longitudinal, un effet centrifuge amène les actionneurs à agir sur la tête (35, 135, 235, 335, 435) du premier composant pour le déplacer axialement par rapport au second composant (44, 244) ; et
dans lequel le dispositif comprend un ressort bimétallique (276) sollicité de façon élastique contre le premier composant (42, 142, 242, 342, 442) pour résister au mouvement axial du premier composant (42, 142, 242, 342, 442) par rapport au second composant (44, 244), l'élasticité du ressort bimétallique (276) étant dépendante de la température.

2. Dispositif selon la revendication 1, dans lequel la première extrémité (47, 247) du second composant est fraisée de manière à définir des rampes inclinées dans des parois du second composant et les actionneurs comprennent un ou plusieurs galets (40, 240) disposés entre la tête (35, 135, 235, 335, 435) du premier composant et la première extrémité (47, 247) du second composant en contact de roulement avec les rampes inclinées.

3. Dispositif selon la revendication 1 ou la revendication 2, dans lequel l'encliquetage comprend une rainure (19, 66, 119, 319A/319B, 419) et un palier (54, 67, 154) assis dedans, la rainure étant agencée pour effectuer une rotation du premier composant (42, 142, 242, 342, 442) par rapport au second composant (44, 244) à mesure que le premier composant est déplacé axialement par rapport au second composant.

4. Dispositif selon la revendication 1 ou la revendication 2, dans lequel l'encliquetage comprend une rainure (19, 66, 119, 319A/319B, 419) et un palier (54, 67, 154) assis dedans, la rainure étant agencée parallèlement à un axe longitudinal de l'arbre du premier composant (42, 142, 242, 342, 442) de manière à contraindre un mouvement du premier composant pour qu'il soit axialement au sein de l'alésage (51, 250) du second composant (44, 244).

5. Dispositif selon l'une quelconque des revendications précédentes, dans lequel le ressort bimétallique (276) est disposé en contact thermique avec un réservoir de liquide et dans lequel en réponse à un changement de température du liquide dans le réservoir, l'élasticité du ressort bimétallique (276) change et ainsi le dispositif peut être désactivé par le ressort bimétallique (276) à certaines températures.

6. Dispositif selon la revendication 2, ou toute revendication qui en dépend, dans lequel les rampes inclinées comprennent une ou plusieurs pistes définies dans et s'étendant radialement à travers les parois (275) du second composant (244), chaque piste étant configurée pour recevoir une portion d'un galet (240) pour contraindre un mouvement du galet pour que le galet ne puisse pas se déplacer circonférentiellement.

7. Dispositif selon l'une quelconque des revendications 1 à 6, dans lequel le premier composant comprend une cannelure pour couplage à un arbre à cames (12, 212) pour en effectuer la rotation.

8. Mécanisme d'entraînement variable (18, 218) pour un arbre à cames (12, 212) comprenant :
un dispositif selon l'une quelconque des revendications 1 à 6, dans lequel l'arbre (48, 148, 248, 348, 448) du premier composant comprend une cannelure pour couplage du premier composant à un arbre à cames, et le second composant (44, 244) comprend un pignon pour être couplé à un vilebrequin pour effectuer une rotation du second composant.

9. Moteur (10) pour un véhicule comprenant :
un ou plusieurs cylindres (26) ;
le ou chaque cylindre comprenant un piston (28) monté en coulissement à l'intérieur ;
le ou chaque piston étant couplé à un vilebrequin (32) par une biellette (30) ;
un premier pignon (22) monté sur le vilebrequin (32) ;
le ou chaque cylindre comprenant une ou plusieurs ouvertures ;
la ou chaque ouverture comprenant une soupape (24) pour fermer l'ouverture ;
un arbre à cames comprenant une ou plusieurs cames (14) pour actionner une soupape (24) respective ; et
un mécanisme d'entraînement variable (18, 218) selon la revendication 8 couplé à l'arbre à cames (12, 212) ; dans lequel le pignon (52) au niveau du second composant est couplé au premier pignon (22) de telle sorte qu'une rotation du vilebrequin effectue une rotation du second composant ;
le moteur (10) étant configuré de telle sorte qu'en réponse à une rotation du second composant (44, 244), autour d'un axe longitudinal, un effet centrifuge amène les actionneurs à agir sur la tête (35, 135, 235, 335, 435) du premier composant pour le déplacer axialement par rapport au second composant (44, 244), de façon à changer un paramètre de commande du fonctionnement de la ou de chaque soupape (24).

10. Moteur selon la revendication 9, comprenant un mécanisme d'entraînement variable (18, 218) selon la revendication 8 lorsqu'elle dépend de la revendication 2, dans lequel la rainure est agencée pour effectuer une rotation du premier composant (42, 142, 242, 342, 442) par rapport au second composant (44, 244) à mesure que le premier composant est déplacé axialement par rapport au second composant de manière à avancer ou retarder l'ouverture ou la fermeture de la ou de chaque soupape (24) par rapport à une position prédéfinie d'un piston (28) respectif au sein de son cylindre (26) respectif.

11. Moteur selon la revendication 9 ou la revendication 10, dans lequel chaque cylindre (26) comprend au moins deux ouvertures ayant chacune une soupape (24), dans lequel au moins une soupape est une soupape d'admission permettant l'insertion d'une charge dans le cylindre, et au moins une soupape est une soupape de refoulement permettant la sortie de gaz d'échappement, le moteur (10) comprenant un premier arbre à cames (12, 212) ayant au moins une came pour actionner l'une respective de l'au moins une soupape d'admission et un second arbre à cames ayant au moins une came pour actionner l'une respective de l'au moins une soupape de refoulement, chaque arbre à cames comprenant un mécanisme d'entraînement variable qui lui est couplé, dans lequel chaque mécanisme d'entraînement variable (18, 218) peut avancer ou retarder l'ouverture ou la fermeture de la ou de chaque soupape respective à laquelle il est couplé par rapport à une position prédéfinie d'un piston (28) respectif au sein de son cylindre (26) respectif, de cette manière la période ou le temps pendant lequel ou laquelle les soupapes d'admission et les soupapes de refoulement sont toutes deux ouvertes ou fermées simultanément peut être commandée selon la vitesse de rotation de l'arbre à cames (32).

12. Moteur selon la revendication 11, dans lequel au moins une soupape (24) montée sur l'arbre à cames (12, 212) comprend un profil qui change dans une direction axiale de telle sorte qu'un mouvement axial de l'arbre à cames effectue un changement dans le profil de came avec un changement de vitesse de rotation du vilebrequin (18, 218).

13. Véhicule comprenant le dispositif de l'une quelconque des revendications 1 à 7, le mécanisme d'entraînement variable (18, 218) de la revendication 8 ou le moteur (10) de l'une quelconque des revendications 9 à 12.
